(19) Europäisches Patentamt / European Patent Office / Office européen des brevets

(11) **EP 3 328 547 B1**

(12) **FASCICULE DE BREVET EUROPEEN**

(45) Date de publication et mention
de la délivrance du brevet:
**23.10.2019 Bulletin 2019/43**

(21) Numéro de dépôt: **16753836.2**

(22) Date de dépôt: **28.07.2016**

(51) Int Cl.:
*B03C 3/017* (2006.01)    *B03C 3/09* (2006.01)
*B03C 3/12* (2006.01)    *B03C 3/36* (2006.01)
*B03C 3/41* (2006.01)    *B03C 3/47* (2006.01)
*G01N 15/00* (2006.01)    *B03C 3/02* (2006.01)
*B03C 3/06* (2006.01)    *B03C 3/38* (2006.01)
*B03C 3/49* (2006.01)    *G01N 15/02* (2006.01)
*G01N 15/06* (2006.01)

(86) Numéro de dépôt international:
**PCT/EP2016/068000**

(87) Numéro de publication internationale:
**WO 2017/017183 (02.02.2017 Gazette 2017/05)**

(54) **DISPOSITIF DE COLLECTE DE PARTICULES CONTENUES DANS UN AEROSOL, MUNI D'ELECTROMETRES POUR DETERMINER LA CONCENTRATION ET LA GRANULOMETRIE DES NANOPARTICULES**

VORRICHTUNG ZUM SAMMELN VON PARTIKELN IN EINEM AEROSOL MIT ELEKTROMETERN ZUR BESTIMMUNG DER NANOPARTIKELKONZENTRATION UND PARTIKELGRÖSSE

DEVICE FOR COLLECTING PARTICLES CONTAINED IN AN AEROSOL, COMPRISING ELECTROMETRES TO DETERMINE NANOPARTICLE CONCENTRATION AND PARTICLE SIZE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.07.2015 FR 1557223**

(43) Date de publication de la demande:
**06.06.2018 Bulletin 2018/23**

(73) Titulaire: **Commissariat à l'Énergie Atomique et aux Énergies Alternatives
75015 Paris (FR)**

(72) Inventeurs:
• **CLAVAGUERA, Simon
38000 Grenoble (FR)**
• **POURPRIX, Michel
91310 Montlhery (FR)**
• **RENOT, Quentin
72650 La Milesse (FR)**

(74) Mandataire: **Nony
11 rue Saint-Georges
75009 Paris (FR)**

(56) Documents cités:
EP-A1- 2 853 882    US-A- 5 098 657
US-A1- 2003 136 205    US-A1- 2010 043 527
US-A1- 2015 040 760    US-B2- 7 549 318

**Description**

Domaine technique

La présente invention concerne le domaine de la collecte et de l'analyse des nanoparticules susceptibles d'être présentes en suspension dans un aérosol.

La présente invention vise à permettre une collecte des nanoparticules en suspension dans les aérosols qui soit simultanée mais sélective en fonction de leurs dimensions, la sélectivité visant de préférence, à collecter en séparant par taille les particules de dimension nanométrique, et ce afin de déterminer leur concentration et leur granulométrie.

Par « nanoparticule », on entend, la définition usuelle selon la norme ISO TS/27687 : un nano-objet dont les trois dimensions sont à l'échelle nanométrique, c'est-à-dire une particule dont le diamètre nominal est inférieur à 100 nm environ.

Bien que décrite en référence à la collecte des nanoparticules, l'invention permet également de traiter les autres particules plus grosses en aval.

Etat de la technique

Depuis les années 1970, la prise de conscience des effets environnementaux et sanitaires engendrés par les aérosols a été à l'origine de développements technologiques nouveaux afin de mieux évaluer les risques associés.

Le domaine s'est rapidement étendu dans les années 1980 pour inclure l'utilisation des aérosols dans des procédés de production à haute technologie, et la maîtrise de la contamination par les aérosols dans les atmosphères ultra-propres.

A partir des années 1990, les recherches se sont intensifiées sur les propriétés des particules ultrafines, i.e. celles de dimension inférieure à 100 nm, et sur l'effet des aérosols sur le climat. Le domaine est donc très large puisqu'il couvre à la fois le champ de l'hygiène industrielle, du contrôle de la pollution de l'air, de la toxicologie par inhalation, de la physique et de la chimie de l'atmosphère, et de la contamination par des aérosols radioactifs dans les installations ou dans l'environnement.

Plus récemment, l'essor rapide des nanotechnologies dans divers domaines tels que la santé, la microélectronique, les technologies de l'énergie ou les produits de consommation courante tels que peintures et cosmétiques, rend indispensable la poursuite de travaux sur les impacts sanitaires et environnementaux de ces nouveaux matériaux afin de s'entourer des conditions de sécurité optimales.

Il est donc nécessaire de mettre au point des méthodes et des outils d'évaluation de l'exposition aux particules, et notamment aux nanoparticules, des travailleurs, des consommateurs et de l'environnement.

Le développement de méthodes et de dispositifs d'échantillonnage et d'analyse d'aérosols dans une large gamme granulométrique jusqu'aux tailles nanométriques est ainsi un enjeu crucial en termes de santé publique et de prévention des risques associés.

En particulier, le développement de dispositifs de prélèvement adapté pour être portatif et être fixé à l'unité à une combinaison de travail d'un travailleur en poste de fabrication de nano-objets, d'élaboration de nanomatériaux ou d'utilisation de ces derniers pourrait s'avérer impératif.

Pour prélever et collecter des particules en suspension dans des aérosols, en vue de leur analyse in situ ou en laboratoire, de nombreux dispositifs existent. Ils peuvent mettre en oeuvre une collecte par filtration sur fibres ou sur membranes poreuses, une collecte par diffusion pour les particules les plus fines, une collecte sous l'effet d'un champ de forces d'inertie (impacteurs, cyclones, centrifugeuses) ou de pesanteur (chambres de sédimentation, élutriateurs) pour les particules plus grosses, ou encore une collecte sous l'effet d'un champ de forces électriques, thermiques ou radiatives.

Parmi ces dispositifs, ceux électrostatiques, c'est-à-dire dont le principe de fonctionnement repose sur la mise en oeuvre d'un champ électrique, en particulier d'un champ électrique intense pour créer un effet de décharge couronne (en anglais « *corona discharge* ») sont couramment utilisés.

Lorsqu'on génère un champ électrique intense dans un volume où des particules d'aérosols sont présentes, ces dernières peuvent se charger électriquement selon deux mécanismes de charge distincts et cela peut se produire concomitamment.

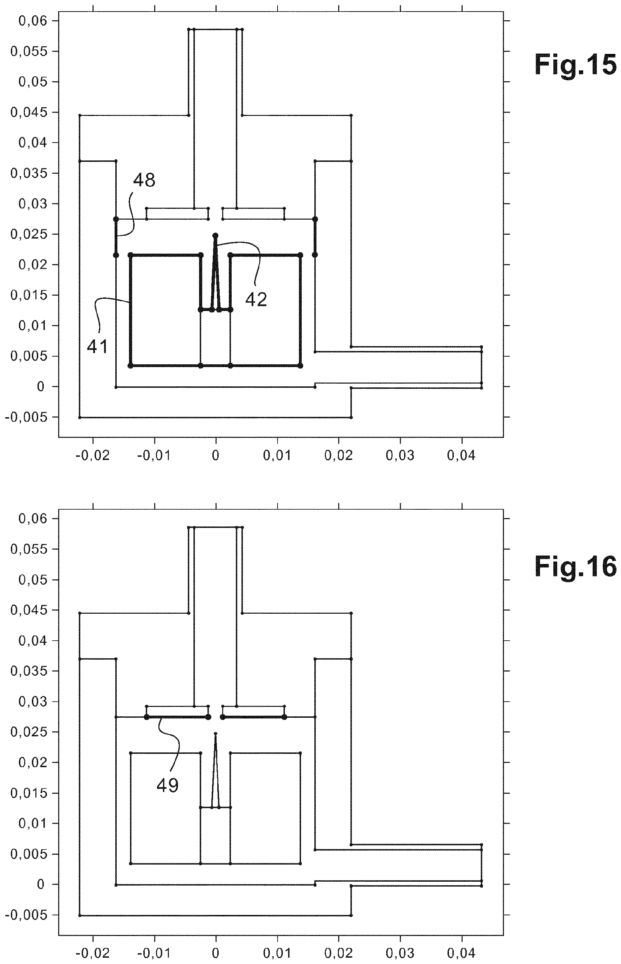

La publication [1], en particulier la figure 15.4 de la page 330 de cet ouvrage, montre que le mécanisme de charge électrique par diffusion d'ions unipolaires, associé au mécanisme de charge électrique par champ, est applicable à une large gamme de tailles de particules, à minima pour les particules de dimensions comprises entre 0,01 à 10 $\mu$m. Il ressort également que le mécanisme de charge électrique par diffusion d'ions unipolaires est surtout prépondérant pour les particules les plus fines, typiquement les nanoparticules, c'est-à-dire celles de dimensions inférieures à 100 nm. A contrario, le mécanisme de charge par champ est plus efficace pour les grosses particules , c'est-à-dire les particules de dimension micronique et sub-micronique ($\geq$300 nm).

Le mécanisme de charge par diffusion d'ions unipolaires s'applique donc de manière prépondérante sur les particules les plus fines. Ce mécanisme est de plus en plus mis en oeuvre dans la métrologie des nanoparticules, notamment pour déterminer leur granulométrie. En effet, beaucoup d'auteurs ont étudié et étudient encore des dispositifs capables de conférer des mobilités électriques élevées aux particules les plus fines, afin de pouvoir les sélectionner dans des instruments adaptés à ce nouveau domaine. On peut citer ici notamment l'article [2] qui fait l'inventaire de la plupart des technologies mises au point à ce jour, ou encore le principe développé par l'auteur de la publication [3], qui utilise une configuration fil-cylindre, très étudiée plus récemment comme indiqué dans la publication [4], mais également avant (publication [5]).

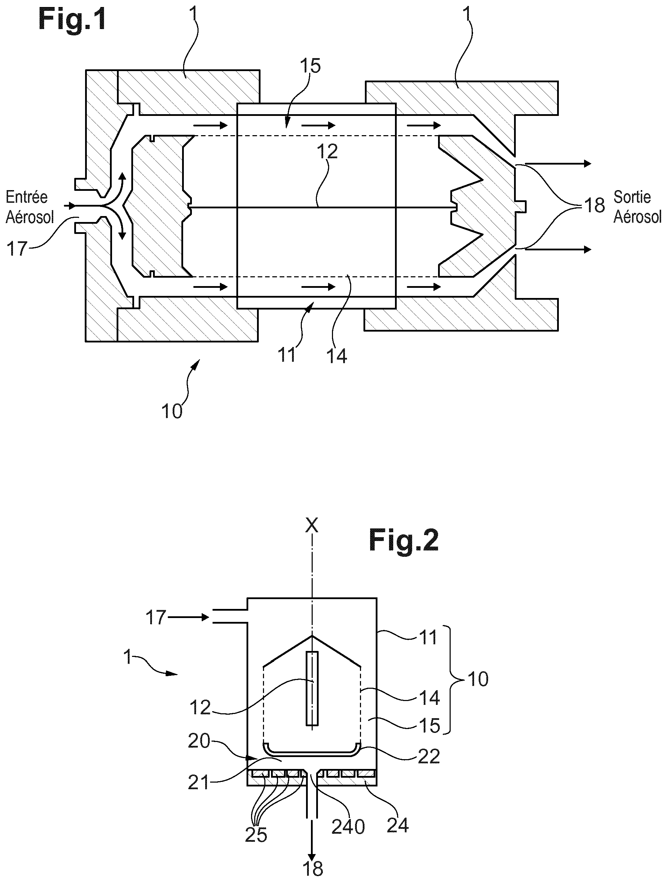

On a reproduit schématiquement en figure 1, un dispositif de charge, aussi appelé chargeur, à diffusion d'ions unipolaires dont la géométrie est de type fil-cylindre, tel qu'illustré dans la publication [4]. Le chargeur 10 comprend un corps à symétrie de révolution 1 en deux parties qui maintiennent un cylindre métallique creux 11 formant une électrode extérieure reliée à une alimentation sous courant alternatif et un fil métallique central 12 agencé selon l'axe du corps et relié à une alimentation haute tension non représentée. Autour du fil central 12 est également agencée de manière annulaire une grille cylindrique 14 formant une électrode intérieure. L'aérosol contenant les particules à charger circule dans le chargeur 10 depuis l'orifice d'entrée 17 jusqu'à l'orifice de sortie 18 en passant dans l'espace 15 délimité entre l'électrode intérieure 14 formée par la grille et l'électrode extérieure 11 formée par le cylindre.

Le fonctionnement de ce chargeur 10 est le suivant : des ions sont produits par effet couronne au niveau du fil central 12 et sont collectés par l'électrode intérieure grillagée 14 portée à un faible potentiel, typiquement à la masse. Une partie de ces ions sort de cette grille 14 pour aller vers la surface interne du cylindre périphérique 11 du fait de la tension appliquée sur ce dernier. Les particules d'aérosol transitent dans l'espace 15 entre grille 14 et cylindre 11 et sont donc chargées par diffusion par les ions unipolaires sortis de la grille 14. Le mécanisme de charge par diffusion s'opère en fonction du produit N*t, où N représente la concentration en ions unipolaires et t le temps de séjour des particules. Le mécanisme de charge par diffusion est le seul à pouvoir se produire car il ne peut y avoir de mécanisme de charge par champ puisque le champ électrique est très faible dans l'espace 15.

Il est intéressant de noter que le processus de charge des aérosols par diffusion d'ions unipolaires permet de conférer un nombre de charges électriques donné à une particule de taille donnée.

Ainsi, le tri ou autrement dit la sélection des particules peut s'opérer selon leur mobilité électrique, c'est-à-dire selon leur dimension.

Ce principe est d'ailleurs mis en oeuvre dans un analyseur différentiel de mobilité électrique (DMA) qui est un instrument capable de fournir la distribution granulométrique de particules fines par comptage de la concentration en particules dans une classe de mobilité électrique donnée. Le comptage peut être réalisé par un Compteur de Particules par Condensation (CPC), qui est la méthode la plus classique.

Un DMA couplé à un CPC constitue un instrument connu généralement sous l'appellation spectromètre de mobilité électrique (SMPS acronyme anglais pour *« Scanning Mobility Particle Sizer »*). Les SMPS sont déjà largement commercialisés par les sociétés telles que PALAS, GRIMM, ou TSI. Le principe de fonctionnement d'un tel instrument est donc le suivant :

- faire varier la haute tension sur l'électrode du DMA, c'est-à-dire en effectuant un balayage (« *scanning »*)*,*
- analyser la réponse du CPC pour chaque valeur de tension obtenue, par traitement du signal en appliquent une déconvolution afin de remonter au spectre granulométrique des particules incidentes connaissant la loi de charge de ces particules.

Il est à noter que cet instrument ne peut fonctionner correctement que si la concentration des particules incidentes est suffisamment stable en amont pendant toute la durée du balayage.

Il est possible de réduire le poids et l'encombrement de tels dispositifs pour les rendre portables et autonomes, comme par exemple l'instrument commercialisé par TSI sous la dénomination « NanoScan-SMPS Modèle 3910 ».

Dans certaines configurations, un CPC peut être remplacé par un électromètre relié à une coupe de Faraday. Cela permet de mesurer des courants électriques très faibles, de l'ordre de 1 femto-ampère (fA). Le courant électrique i détecté par l'électromètre est proportionnel à la concentration en particules N portant une charge électrique selon la relation:

$$i = Q*N*e,$$

où e est la charge élémentaire ($1,6.10^{-19}$ C) et Q le débit volumique des particules issues du DMA et entrant dans la coupe de Faraday. Par exemple, l'instrument commercialisé par TSI sous la dénomination « NanoScan-SMPS Modèle 3068B » met en oeuvre un tel dispositif.

Des dispositifs plus intégrés se sont développés en disposant, à l'intérieur d'un DMA à écoulement axial, plusieurs électrodes de collecte agencés en aval les unes des autres et reliées chacune à un électromètre, ce qui permet de fonctionner avec une haute tension constante sur l'électrode interne, et donc sans balayage, et permet donc la mesure de concentrations en particules qui peuvent varier rapidement. L'instrument commercialisé par TSI sous la dénomination « NanoScan-SMPS Modèle 3090» met en oeuvre un tel dispositif.

Le brevet US 5098657 s'intéresse à la mesure des résidus non volatiles dans des liquides et divulgue un système permettant de charger des particules et de les déposer sur un filtre ou une surface sans les trier selon leur taille.

D'autres dispositifs à détection par électromètres ont été récemment proposés dans le but avant tout d'offrir une miniaturisation.

Ainsi, le brevet US 7549318 B2 divulgue un dispositif dans lequel les particules sont d'abord électriquement chargées par diffusion d'ions unipolaires puis collectées, le courant mesuré par trois électromètres les uns à la suite des autres dont le dernier relié à une coupe de faraday, permettant de déterminer la concentration et le diamètre moyen des particules.

Un autre dispositif est mis en oeuvre dans le brevet US 8044350 B2. Ce brevet divulgue un dispositif dans lequel les particules sont d'abord électriquement chargées par un chargeur à diffusion d'ions unipolaires, puis sélectionnées dans un précipitateur électrostatique en forme de disque agencé en aval du chargeur, en faisant varier la haute tension appliquée, c'est-à-dire en effectuant un balayage de tension (« scanning) ». Le courant mesuré par un électromètre relié au précipitateur permet de déterminer la concentration et la granulométrie des particules.

Il ressort de l'étude de l'état de l'art qu'il n'a pas été proposé de dispositif permettant à la fois de collecter simultanément des nanoparticules présentes dans un aérosol et qui sont de dimensions différentes, et de les séparer selon des gammes de dimensions, et ce afin de permettre leur analyse ultérieure pour en connaître leur concentration, leur composition physico-chimique et/ou leur morphologie en fonction de leur gamme de dimensions.

En effet, d'une part par définition les instruments à DMA couplés à des CPC mentionnés ci-dessus, ne réalisent pas le dépôt des particules triées qui ne peuvent donc faire l'objet d'une analyse physico-chimique, et d'autre part ceux munis d'électromètre(s) ne sont pas conçus avec des zones de collecte pour une analyse physico-chimique ultérieure des nanoparticules collectées et en outre avec une géométrie adaptée à une utilisation portable.

Il existe donc un besoin pour un dispositif permettant à la fois de collecter simultanément des nanoparticules présentes dans un aérosol et qui sont de dimensions différentes, et de les séparer selon des gammes de dimensions, notamment afin de permettre l'analyse ultérieure des nanoparticules collectées et séparées pour en connaître leur concentration et leur composition chimique séquentiellement en fonction de leur gamme de dimension.

Le but général de l'invention est alors de répondre au moins en partie à ce besoin.

Exposé de l'invention :

Pour ce faire, l'invention a tout d'abord pour objet un dispositif de collecte de nanoparticules susceptibles d'être présentes dans un aérosol, comprenant :

- un conduit sous la forme d'un cylindre creux de révolution autour d'un axe longitudinal (X), le conduit comprenant un orifice d'entrée et un orifice de sortie entre lesquels l'aérosol peut circuler ;
- des moyens d'aspiration pour faire circuler l'aérosol depuis l'orifice d'entrée jusqu'à l'orifice de sortie;
- en aval de l'orifice d'entrée, un chargeur à diffusion d'ions unipolaires comprenant une électrode sous la forme d'un fil qui s'étend le long de l'axe (X) et entouré par une électrode sous la forme d'une grille, le chargeur étant adapté pour charger les nanoparticules dans l'espace séparant la grille d'une portion conductrice de paroi intérieure du conduit, par diffusion d'ions unipolaires au travers de la grille;
- en aval du chargeur à diffusion, une électrode dite électrode de champ sous la forme d'une plaque circulaire qui s'étend orthogonalement à l'axe (X), et au moins un substrat-plan de collecte, parallèle à l'électrode de champ, percé dans sa partie centrale d'une ouverture débouchante, et comprenant différents anneaux concentriques autour de l'ouverture débouchante, reliés individuellement à au moins un électromètre; dispositif dans lequel la différence de potentiel appliquée entre l'électrode de champ et le substrat étant adaptée pour générer sans effet couronne un champ électrique dans l'espace les séparant et ainsi d'une part laisser passer à travers l'ouverture débouchante les particules de dimension au-delà des nanoparticules et d'autre part collecter les nanoparticules, préalablement chargées par le chargeur à diffusion, par dépôt sur une zone de collecte du substrat-plan définie par les différents anneaux.

Ainsi, l'invention consiste en une collecte électrostatique des nanoparticules présentes dans un aérosol, selon un mécanisme de charge par diffusion d'ions unipolaires puis application d'un champ sans effet couronne qui permet d'effectuer leur dépôt selon des anneaux concentriques en différents endroits d'un seul et même substrat plan agencé orthogonalement au sens de circulation de l'aérosol. Les particules les plus grosses sont déposées vers le centre du substrat-plan et les plus fines à la périphérie.

Les particules présentes dans l'aérosol de dimensions supérieures aux nanoparticules sont extraites par l'ouverture débouchante au centre du substrat-plan.

Les électromètres reliés individuellement aux anneaux concentriques du substrat-plan de collecte permettent d'obtenir, par un traitement des signaux électriques par déconvolution, la concentration et la granulométrie des nanoparticules qui s'y déposent.

Le substrat-plan sur lequel le dépôt des nanoparticules est effectué est monté amovible. Après un temps de prélèvement donné, les nanoparticules déposées peuvent ensuite être analysées par des techniques classiques de caractérisation physique ou physico-chimique, telle que microscopie optique ou électronique, scanner de surface, spectroscopie de fluorescence X (XRF pour « *X-Ray Fluoresence* »), micro-fluorescence X ($\mu$-XRF), spectroscopie sur plasma induit par laser (LIBS pour « *Laser-Induced Breakdown Spectroscopy* »)...

Parmi ces techniques d'analyse, celles à résolution spatiale sont particulièrement adaptées à l'analyse du (des) substrat(s) de collecte du dispositif selon l'invention. Tout particulièrement, les techniques de $\mu$-XRF, de LIBS voire de $\mu$-LIBS apparaissent comme les méthodes de choix pour déterminer la composition chimique des nanoparticules collectées selon des anneaux concentriques.

Comme évoqué ci-dessus, les nanoparticules de masse les plus faibles seront réparties sur une circonférence plus grande que les plus grosses contribuant notablement plus à la masse. Ceci a pour conséquence directe une densité surfacique en espèces d'intérêt très différente du centre vers la périphérie. En première approche, l'homme de l'art pourrait percevoir cette constatation comme une difficulté technique à franchir pour l'application de techniques d'analyse à résolution spatiale telles que la LIBS, dont la résolution va jusqu'à des valeurs de l'ordre de 100 $\mu$m. Or, les inventeurs ont mis en évidence qu'une technique de LIBS permet de sommer les spectres pour une même classe de nanoparticules, classe de taille en l'occurrence, pour améliorer le rapport signal sur bruit d'autant plus que la circonférence est grande. Ainsi, le dispositif selon l'invention permettrait de récupérer une information quantitative sur la composition chimique des nanoparticules malgré le fort gradient de densité surfacique existante entre le centre du substrat-plan de collecte et sa périphérie.

Le nombre d'anneaux concentriques reliés à des électromètres dépend de la précision recherchée pour déterminer la distribution granulométrique des nanoparticules.

Un nombre de quatre anneaux concentriques, peut s'avérer suffisant pour les applications envisagées, notamment pour la connaissance de la distribution granulométrique des nanoparticules susceptibles d'être inhalées par des opérateurs sur leurs postes de travail. Intrinsèquement, la technique d'analyse n'est pas un frein puisque une analyse LIBS standard avec des résolutions de 100 $\mu$m permettrait de distinguer jusqu'à une centaine d'anneaux concentriques. En revanche, l'électronique associée à la mesure de très faibles courants dans le dispositif selon l'invention est dimensionnante pour le développement d'un dispositif portable. Aussi, un nombre de quatre anneaux semble être un bon compromis.

Un dispositif de collecte selon l'invention est particulièrement bien adapté pour l'échantillonnage de nanoparticules dans des milieux gazeux, notamment l'air des locaux ou de l'environnement dans le but de connaître la concentration, la granulométrie, la composition chimique et/ou la morphologie des nanoparticules d'aérosol susceptibles d'être inhalées.

Le dispositif de collecte selon l'invention peut constituer un détecteur avec une fonction d'alarme en temps réel, en cas de dépassement d'un seuil prédéterminé.

Le dispositif selon la présente invention permet ainsi d'évaluer l'exposition individuelle d'opérateurs sur leurs lieux de travail où sont dégagées des nanoparticules manufacturées avec un suivi en temps réel du signal du nombre de nanoparticules, a posteriori de leur composition chimique pour s'affranchir des autres particules présentes incidemment dans l'aérosol et en outre avec un tri des nanoparticules collectées sur le substrat selon leur taille afin de pouvoir distinguer, au moins en partie, les fractions les plus pertinentes sur le plan sanitaire et réglementaire.

Selon un mode de réalisation avantageux, le dispositif comprend en outre un système adapté pour permettre le chemisage du flux d'aérosol, circulant dans l'espace séparant la grille de la paroi intérieure du conduit, entre deux flux laminaires d'air filtré.

En aval de l'ouverture débouchante du substrat de collecte, le dispositif selon l'invention peut comprendre avantageusement :

- un filtre, de préférence sous la forme d'une membrane filtrante, adaptée pour retenir les particules ayant passé l'ouverture débouchante, le filtre pouvant être relié à un électromètre ;
- un élément consistant en un disque supportant une pointe reliée à une alimentation haute tension pour créer une décharge couronne, de sorte à collecter sur la face inférieure du substrat les particules ayant passé l'ouverture débouchante, par l'intermédiaire d'un champ électrique de collecte imposé entre le substrat et le disque ;
- une trappe sous la forme d'un disque percé d'un trou borgne interposé en dessous de l'ouverture, de sorte à collecter par impaction inertielle une partie des particules, selon une gamme de dimension donnée, ayant passé l'ouverture débouchante.

Avec la trappe, plusieurs variantes peuvent être prévues.

Ainsi, selon une première variante, les lèvres du trou borgne sont sous la forme d'une multitude de pointes agencées circulairement ou d'une lame à arête effilée, le disque étant relié à une alimentation haute tension pour créer une décharge couronne dans l'espace entre la face inférieure du substrat et les lèvres du trou borgne de sorte à collecter, selon une gamme de dimension donnée, une partie seulement des particules, ayant passé l'ouverture débouchante, de préférence des particules de dimension comprise entre 0,1 et 4 μm.

Les moyens d'aspiration peuvent être constitués par une pompe ou un ventilateur.

De manière alternative, les moyens d'aspiration peuvent être constitués au moins en partie par des actionneurs-plasma.

On peut prévoir l'une ou plusieurs des caractéristiques avantageuses comme suit :

- l'électrode de champ est reliée à une alimentation haute tension, de préférence comprise entre 2 et 6kV ;
- la grille est reliée à une alimentation basse tension, de préférence de l'ordre de 100V ;
- le substrat-plan est relié au potentiel zéro.

L'invention a également pour objet un procédé de fonctionnement d'un dispositif de collecte décrit précédemment, comprenant une étape d'émission d'une alarme en cas de dépassement d'une valeur seuil prédéterminée mesurée à l'aide du ou des électromètres reliés aux anneaux concentriques intégrés au substrat-plan de collecte.

L'invention a enfin pour objet différentes utilisation d'un dispositif qui vient d'être décrit, soit pour collecter tout en les classant des nanoparticules de dimensions différentes, soit pour évaluer l'exposition individuelle des travailleurs ou des consommateurs aux nanoparticules ou encore pour déterminer une distribution granulométrique d'un aérosol contenant une fraction nanoparticulaire.

Description détaillée

D'autres avantages et caractéristiques ressortiront mieux à la lecture de la description détaillée, faite à titre illustratif et non limitatif, en référence aux figures suivantes parmi lesquelles:

- la figure 1 est une vue en coupe longitudinale d'un dispositif de charge, ou chargeur à diffusion d'ions unipolaires ;
- la figure 2 est une vue schématique en coupe longitudinale d'un exemple de dispositif de collecte de nanoparticules selon l'invention;
- la figure 3 est une vue schématique en coupe longitudinale d'une première variante du dispositif selon la figure 2 ;
- la figure 4 est une vue schématique en coupe longitudinale d'un mode de réalisation avantageux du dispositif selon la figure 2 ;
- la figure 5 est une vue schématique en coupe longitudinale d'une alternative au mode de réalisation avantageux du dispositif selon la figure 4 ;
- la figure 6 est une vue schématique en coupe longitudinale d'une autre alternative au mode de réalisation avantageux du dispositif selon la figure 4 ;
- la figure 7 est une vue issue de la simulation par le logiciel de calcul par éléments finis pour déterminer les profils de vitesse de particules de 1 μm portant 50 charges élémentaires ainsi que leurs trajectoires dans un dispositif selon l'invention comme illustré en figure 3 ;
- la figure 8 est une vue issue de la simulation par le logiciel de calcul par éléments finis pour déterminer les profils de vitesse de particules de 100 nm portant 4 charges élémentaires ainsi que leurs trajectoires dans un dispositif selon l'invention comme illustré en figure 3 ;
- la figure 9 est une vue issue de la simulation par le logiciel de calcul par éléments finis pour déterminer les profils de vitesse de particules de 10 nm portant 1 charge élémentaire ainsi que leurs trajectoires dans un dispositif selon l'invention comme illustré en figure 3 ;
- la figure 10 est une vue schématique en coupe longitudinale d'un autre mode de réalisation avantageux d'un dispositif de collecte de nanoparticules selon l'invention;
- la figure 11 est une vue schématique de détail de la partie inférieure du dispositif selon la figure 10, sur laquelle des simulations par calcul par éléments finis ont été réalisées;
- les figures 12 et 13 reproduisent la figure 11 et illustrent les potentiels électriques et de masse des différents éléments de la partie du dispositif selon une première configuration de simulation par calcul par éléments finis ;
- la figure 14 une vue issue de la simulation par le logiciel de calcul par éléments finis pour déterminer les profils de vitesse de particules de 1 μm à un débit de 1L/min, ainsi que leurs trajectoires dans un dispositif selon l'invention comme illustré en figure 11;
- les figures 15 et 16 reproduisent la figure 11 et illustrent les potentiels électriques et de masse des différents éléments de la partie du dispositif selon une deuxième configuration de simulation par calcul par éléments finis.

Dans l'ensemble de la présente demande, les termes « vertical », « inférieur », « supérieur », « bas », « haut », « dessous », « dessus », « hauteur » sont à comprendre par référence par rapport à un dispositif de collecte agencé à la verticale avec l'orifice d'entrée en haut.

De même, les termes « entrée », « sortie », « amont » et « aval » sont à comprendre par référence par rapport au sens du flux d'aspiration au travers d'un dispositif de collecte selon l'invention. Ainsi, l'orifice d'entrée désigne l'orifice du dispositif par lequel l'aérosol contenant les particules est aspiré tandis que celui de sortie désigne celui par lequel le flux d'air sort.

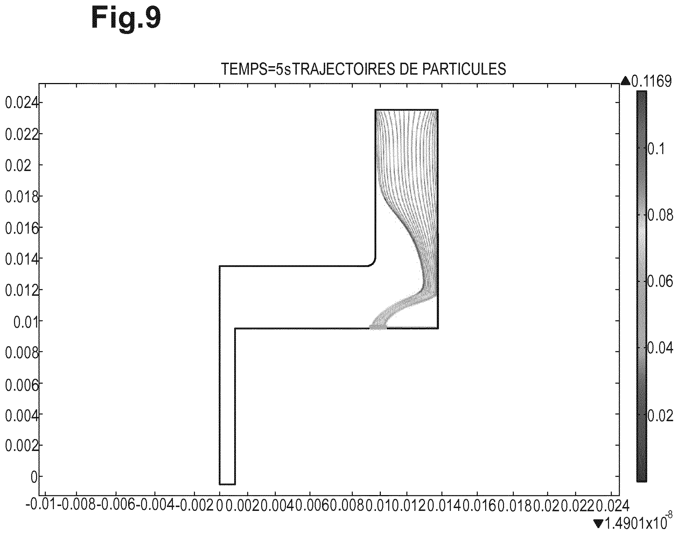

Par souci de clarté, une référence numérique désignant un même élément d'un dispositif de collecte est identique selon l'une quelconque des figures 1 à 16.

La figure 1 a déjà été commentée en préambule. Elle n'est donc pas détaillée ci-après.

Par souci de clarté, les mêmes éléments des dispositifs de collecte selon l'état de l'art et selon les exemples illustrés de l'invention sont désignés par les mêmes références numériques.

On a représenté en figure 2 un exemple de dispositif électrostatique 1 selon l'invention pour la collecte sélective de nanoparticules susceptibles d'être contenues dans un aérosol.

Un tel dispositif selon l'invention permet de collecter les nanoparticules et de les séparer selon des gammes de taille.

Le dispositif de collecte 1 comprend tout d'abord un conduit 11 qui est un cylindre creux de révolution autour de l'axe longitudinal X et qui est électriquement relié au potentiel zéro.

Le dispositif de collecte 1 comprend à l'intérieur du conduit 11, d'amont en aval, entre son orifice d'entrée 17 et son orifice de sortie 18, essentiellement deux étages distincts et agencés l'un 10 immédiatement en aval de l'autre 20.

Le premier étage est constitué d'un chargeur à diffusion d'ions unipolaires 10, et est similaire à celui décrit précédemment en relation avec la figure 1.

Le chargeur 10 comprend ainsi une électrode centrale qui s'étend selon l'axe X sous la forme d'un fil 12 relié à une alimentation délivrant une haute tension, adaptée pour créer ainsi une décharge couronne au voisinage du fil 12.

Il comprend également une électrode périphérique sous la forme d'une grille 14 reliée à une alimentation basse tension.

Le chargeur 10 est adapté pour charger les nanoparticules dans l'espace 15 séparant la grille 14 de la paroi intérieure du conduit 11, par diffusion d'ions unipolaires au travers de la grille.

L'étage 20, en aval du chargeur 10, comprend une électrode de champ centrale 22 sous la forme d'un disque plein qui s'étend orthogonalement à l'axe (X) reliée à une alimentation délivrant une haute tension et un substrat-plan 24 agencé parallèle à l'électrode de champ en définissant un espace 21.

Avantageusement, une seule alimentation haute tension permet à la fois de réaliser l'effet couronne au voisinage du fil 12 et d'alimenter l'électrode de champ 22. La haute tension est choisie préférée entre 2 et 6 kV, de façon encore préférée à environ 4 kV.

Le substrat-plan 24 est électriquement relié au potentiel zéro et percé dans sa partie centrale d'une ouverture débouchante 240, et comprend différents anneaux 25 concentriques autour de l'ouverture débouchante, reliés individuellement à un électromètre non représenté. Le substrat-plan 24 est de préférence conducteur, typiquement en métal, ou semi-conducteur. Son diamètre est de préférence compris entre 10 et 25 mm, de préférence encore de l'ordre de 20 mm.

Le fonctionnement du dispositif de collecte qui vient d'être décrit en référence à la figure 2 est le suivant.

L'air contenant les particules à collecter est aspiré par l'orifice d'entrée 17 par l'action de moyens d'aspiration non représenté. Il est uniformément réparti dans un volume cylindrique intérieur au conduit 11.

Les nanoparticules de l'aérosol sont électriquement chargées par diffusion d'ions unipolaires dans l'espace 15 séparant la grille 14 du conduit 11.

Ces nanoparticules, à grande mobilité électrique, et les autres particules plus grosses à plus faible mobilité électrique, pénètrent dans l'étage 20.

Le champ électrique sans effet couronne créé dans l'espace 24 par la différence de potentiel appliquée entre l'électrode de champ 22 et le substrat 24 assure la collecte des particules les nanoparticules préalablement chargées par le chargeur à diffusion par dépôt sur ce dernier. Plus précisément, les nanoparticules les plus fines, à mobilité électrique plus grande, sont précipitées vers la périphérie du substrat-plan, c'est-à-dire sur les anneaux périphériques, les nanoparticules plus grosses vers le centre du substrat-plan, c'est-à-dire sur les anneaux à proximité de l'ouverture débouchante 240.

Les particules de dimension supérieure aux nanoparticules quant à elles ne sont pas collectées par le substrat 24 mais extraites à travers l'ouverture 240 en direction de l'orifice de sortie 18. En effet, les paramètres de fonctionnement du dispositif selon l'invention sont calculés de telle manière que toutes les particules nanométriques, i.e. de taille inférieure à 100 nm, sont déposées sur le substrat-plan 24. Autrement dit, toutes les particules de taille supérieure à 100 nm sont évacuées par l'ouverture 240.

A titre d'illustratif, un substrat-plan 24 de 2 cm de diamètre, avec un espace 21 de 4 mm par rapport à l'électrode 22, qui serait portée à un potentiel de 4 kV, permet de collecter toutes les nanoparticules à un débit d'aérosol de 2 l/mn.

Un traitement du signal par déconvolution des signaux issus des électromètres reliés chacun à un des anneaux concentriques 25 permet d'obtenir la concentration et la granulométrie des nanoparticules déposées sur l'ensemble des anneaux.

Ultérieurement, le substrat 24 peut être enlevé du dispositif 1 selon l'invention afin de déterminer la composition chimique et/ou la morphologie des nanoparticules collectées selon les anneaux concentriques 25.

Une analyse par spectroscopie sur plasma induit par laser LIBS est particulièrement avantageuse malgré le fort gradient de densité surfacique des nanoparticules déposées qui peut exister entre le centre du substrat et sa périphérie.

Comme illustré en figures 2 à 5, le nombre d'anneaux concentriques est égal à quatre. Les inventeurs considèrent que ce nombre est un bon compromis entre la haute résolution possible de la LIBS qui permettrait de distinguer tous les anneaux concentriques et le dimensionnement possible de l'électronique associée à la mesure de très faibles courants de sorte à rendre le dispositif selon l'invention qui soit portable.

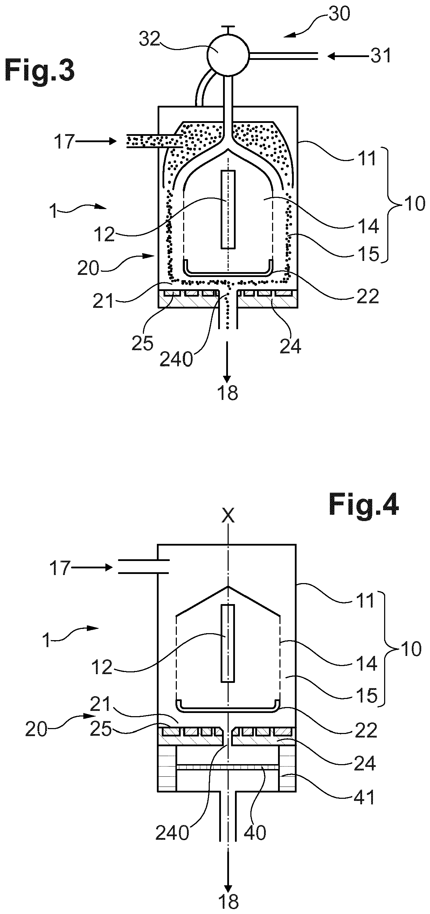

On a représenté en figure 3, une variante avantageuse du dispositif 1 selon l'invention. Selon cette variante, il est prévu un système 30 permettant le chemisage du flux d'aérosol entre deux flux laminaires d'air filtré. L'air filtré peut avantageusement être celui en sortie de l'orifice de sortie 18 qui a en outre été épuré des particules plus grosses que les nanoparticules collectés sur le substrat 24.

Ainsi, cet étage 30 de chemisage de flux comprend un orifice 31 d'alimentation en air filtré relié en aval à un répartiteur 32.

Comme montré en figure 3, l'air filtré introduit depuis l'orifice 31 alimente le répartiteur 32 qui génère deux flux laminaires d'air filtré concentriques, l'un contre la paroi interne du conduit cylindrique 11 et l'autre contre la paroi externe (grille 14) du chargeur 10. Ainsi, comme symbolisé par les points, le flux de l'aérosol contenant les nanoparticules chargées se trouve chemisé entre les deux flux laminaires d'air filtré. Cela permet d'accroître la résolution de la sélection granulométrique des nanoparticules.

On précise que sur cette figure 3, aucun champ électrique n'est appliqué entre l'électrode 22 et le substrat 24.

Le chemisage de l'aérosol comme montré en figure 3, offre en outre les meilleures conditions de fonctionnement du chargeur 10 puisque le temps de séjour des particules dans l'espace ionisé 15 est particulièrement bien maîtrisé dans ce type d'écoulement (publication [4]).

En pratique, le débit d'air filtré entrant par l'orifice 31 peut être choisi avantageusement du même ordre de grandeur que le débit d'aérosol entrant par l'orifice 17, ce qui apporte globalement une dilution d'un facteur 2.

Selon un mode de réalisation avantageux, on peut réaliser le dispositif 1 de sorte à collecter toutes les particules, même les plus grosses, i.e. celles de dimensions supérieures à 100 nm qui ne se seraient pas déposées préalablement sur le substrat-plan 24 du fait d'une mobilité électrique trop faible.

Un tel mode est illustré en figure 4 : un filtre 40 avantageusement sous la forme d'un filtre plan, comme une membrane filtrante est interposé dans le conduit 11 en aval de l'ouverture débouchante 240.

Ce filtre 40 est relié à un électromètre supplémentaire non représenté et il est maintenu par un support isolant 41.

Ainsi, il est possible de connaître en temps réel, le ratio entre nanoparticules et particules de dimensions supérieures à 100 nm présentes dans l'aérosol.

Le filtre 40 peut être lui-même analysé à posteriori pour déterminer la composition chimique des particules de taille supérieure à 100 nm, et éventuellement leur granulométrie par analyse d'image.

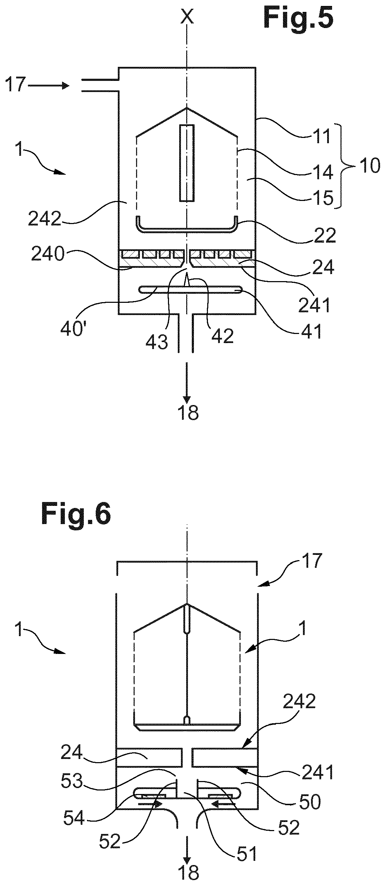

Une alternative au mode de la figure 4 est montrée en figure 5.

En lieu et place d'un filtre 40, on peut implanter un piège électrostatique 40'.

Ce piège électrostatique peut consister en un disque 41 supportant une pointe 42 reliée à une alimentation haute tension pour créer une décharge couronne.

La pointe 42 s'étend selon l'axe X immédiatement en aval de l'ouverture 240. Le disque 41 peut être avantageusement porté au même potentiel que la pointe 42.

Avec cette configuration, les particules de taille supérieure à 100 nm traversant l'ouverture 240 sont chargées électriquement dans l'espace 43 au-dessus de la pointe 42 et traversant le champ intense créé par la pointe.

Les particules ainsi chargées sont ensuite précipitées sur la face inférieure 241 du substrat 24, par l'intermédiaire d'un champ électrique de collecte imposé entre le substrat 24 et le disque 41 porté, par exemple, au même potentiel que la pointe.

L'avantage essentiel du dispositif illustré en figure 5 est que les deux faces du substrat 24 peuvent être exploitées pour l'analyse: la face supérieure 242 pour l'analyse des nanoparticules, c'est-à-dire de taille inférieure à 100 nm, la face inférieure 241 pour l'analyse des particules de taille supérieure à 100 nm.

On a illustré en figure 6, une autre variante du dispositif de collecte selon la figure 3.

Pour collecter une partie seulement des particules de dimensions supérieures à 100 nm présentes dans l'aérosol, il est prévu une trappe 50 sous la forme d'un disque percé d'un trou borgne 51 interposé en dessous de l'ouverture 240 pour ne laisser passer que la fraction alvéolaire des particules.

La trappe 50 est portée à haute tension dans le but de créer un effet couronne entre les lèvres 52 avantageusement de forme effilée du trou borgne 51 et la face inférieure 241 du substrat 24.

Ainsi, on collecte les particules d'une taille comprise entre 100nm et le diamètre aérodynamique de coupure. A titre indicatif, pour avoir un diamètre aérodynamique de coupure à 4 $\mu$m à un débit de 1 l/mn, le diamètre du trou borgne 51 est de l'ordre de 2 mm.

Les particules extraites de la trappe 50, de granulométrie avantageusement comprise entre 0,1 $\mu$m et 4 $\mu$m, se chargent dans l'espace 53 séparant la trappe 50 du substrat 24 selon un mécanisme de charge par champ et sont finalement collectées sur la face inférieure 241 du substrat 24.

Comme déjà mentionné l'écoulement de l'aérosol au sein du dispositif 1 selon l'invention peut être établi par un ventilateur.

Pour éviter notamment le bruit et les vibrations, ce ventilateur peut avantageusement être remplacé par un ou des actionneurs plasma comme ceux représentés implantés à l'intérieur de la trappe 50. Ces actionneurs-plasma peuvent être du type de ceux décrits dans les brevets US 6200539 B1 et US 8348626 B2.

Les inventeurs ont simulé le fonctionnement du dispositif de collecte selon l'invention tel qu'illustré aux figures 2 à 6 et ce, à l'aide d'un logiciel de calcul par éléments finis commercialisé sous la dénomination « COMSOL Multiphysics® ».

Le dispositif de collecte 1 avec la même géométrie que celle montrée en figure 3 peut être étudié sous le logiciel de calcul par éléments finis COMSOL en regardant les écoulements, les champs électriques et les trajectoires de particules.

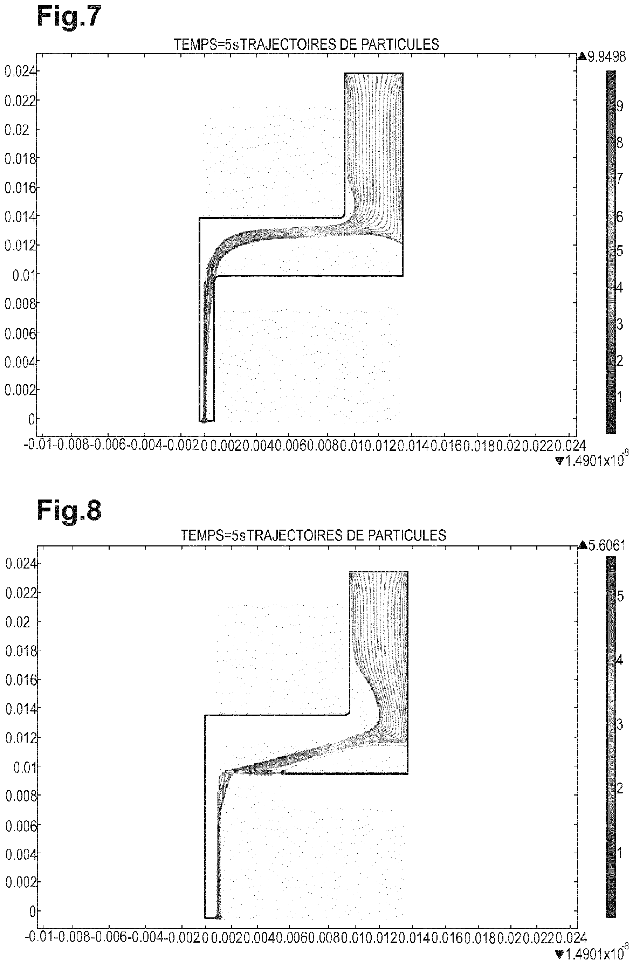

Les figures 7, 8 et 9 sont des vues issues de la simulation par le logiciel pour déterminer les profils de vitesse de particules, ainsi que les trajectoires des particules dans un dispositif selon l'invention comme illustré en figure 3.

Les conditions d'essais pour chacune de ces figures 7 à 9 sont les suivantes :

- le débit d'aérosol principal est de 0.5 L/min,
- le débit d'air filtré participant au chemisage du flux d'aérosol principal est de 1 L/min,
- la distance entre le plan 22 et le plan 24 est de 4 mm ;
- le potentiel appliqué au plan 22 est de 4 kV.

Lors des essais de simulation, l'air filtré est introduit pour chemiser le flux d'aérosol principal dans l'espace de collecte 21.

Une première couche d'air filtré a été introduite au niveau du bord externe de l'électrode 22 et une seconde au niveau du bord externe de la surface de collecte 24.

Ainsi, le flux de l'aérosol contenant les particules chargées se trouve chemisé entre les deux flux laminaires d'air filtré.

Il ressort des figures 7 à 9, réalisées par le logiciel de calcul par éléments finis « COMSOL Multiphysics », que :

- les particules microniques passent toutes par l'orifice 240 ;
- une grande partie des particules de 100 nm sont collectées et une petite partie passe par l'orifice 240, ce qui met bien en évidence le seuil de coupure du dispositif 1 à environ 100 nm ;
- les nanoparticules de 10 nm de diamètre sont collectées sur la périphérie externe du disque de collecte 24 sous la forme d'un anneau.

Ainsi, le dispositif de collecte 1 selon l'invention comme montré au figures 2 à 6 permet de collecter par dépôt sur un même support, par exemple un disque métallique, des nanoparticules de dimensions différentes, sur des anneaux concentriques correspondant à des granulométries bien déterminées.

On peut prévoir en outre des moyens supplémentaire pour collecter, en aval du substrat collecteur des nanoparticules, des particules de dimension supérieure à 100nm, typiquement des particules de taille micronique.

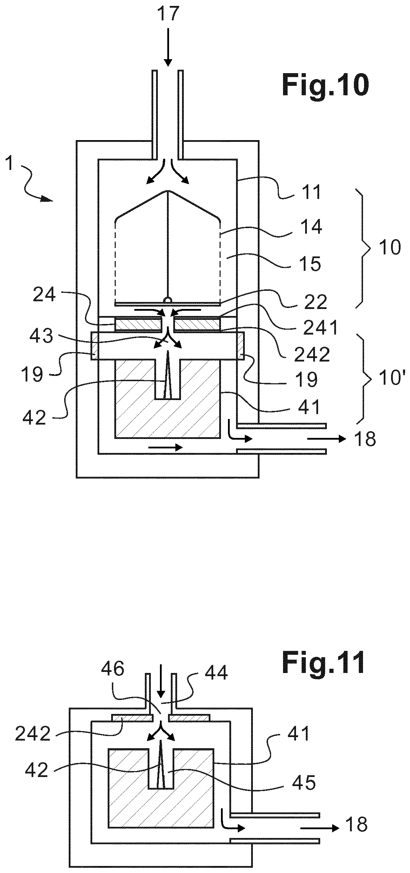

On a représenté en figure 11, un dispositif de collecte selon un autre mode de réalisation de l'invention.

Dans ce dispositif de collecte 1, l'aérosol à analyser pénètre par l'orifice d'entrée 17 et sort par l'orifice de sortie 18 sous l'effet d'une aspiration provoquée par une pompe externe non représentée.

L'aérosol est ensuite uniformément réparti dans un volume cylindrique intérieur au conduit 11.

Un chargeur à diffusions d'ions unipolaires 10 permet de charger électriquement les particules les plus fines dans l'espace annulaire 15.

L'électrode 22 est portée à haute tension alors qu'un premier disque de collection 241 porté par la face supérieure d'un substrat isolant 24, est maintenu au potentiel zéro.

Le champ électrique établi entre l'électrode 22 et le disque 241 précipite les particules les plus fines sont précipitées vers la périphérie du disque 241 et les particules les plus grosses vers le centre du disque 241.

Une série d'électromètres peut être agencée sur le disque 241 afin de déterminer la concentration de particules qui s'y déposent sous la forme d'anneaux concentriques.

Les particules les plus grosses qui n'ont pas été chargées par le chargeur 10 et qui n'ont pas été précipitées sur le disque 241 à l'aide de l'électrode 22, passent par le trou central et sont chargées électriquement dans l'espace 43 en traversant le champ intense créé par une pointe 42 maintenue sur un support 41 et alimentée en haute tension pour créer un effet couronne.

Un champ électrique de collection peut être ainsi établi entre le second disque de collection 242 porté par la face inférieure du substrat 24 qui est maintenu au potentiel, et le support 41 qui est, quant à lui, porté au même potentiel que la pointe 42.

Le dispositif 1 de la figure 11 peut comprendre en outre des électrodes 19 portées à haute tension, par exemple au même potentiel que la pointe 42. Comme montré sur cette figure 11, les électrodes 19 sont agencées à la périphérie du conduit 11 et s'étendent sur la hauteur de l'espace 43.

Ces électrodes 19 permettent de concentrer le flux de particules chargées vers le disque de collection 242, permettant d'obtenir une collecte plus importante avec moins de pertes en dehors du disque de collection 242.

Les particules peuvent alors être précipitées sur le second disque de collection 242 séparé physiquement du premier disque 241 par le substrat isolant 24. En lieu et place du substrat isolant 24, on peut implanter un tuyau de transport d'aérosol.

Cette séparation physique définit ainsi en quelque sorte deux sous-ensembles distincts, un sous-ensemble 10 de charge et collecte des particules les plus fines et un sous-ensemble 10' de charge et collecte des particules les plus grosses.

Les inventeurs ont également simulé le fonctionnement du dispositif de collecte de la figure 11, à l'aide du logiciel « COMSOL Multiphysics® ».

Dans ces simulations de nombreux paramètres géométriques et de fonctionnement ont pu être testés.

Pour chaque essai, la trajectoire et le comportement des particules à l'intérieur du dispositif ont été simulés.

L'efficacité totale de collecte du dispositif 1 a pu être mesurée, en comptant le nombre de particules à la sortie du dispositif, et l'efficacité de collecte uniquement sur le disque de collection 241 a été également pu être mesurée.

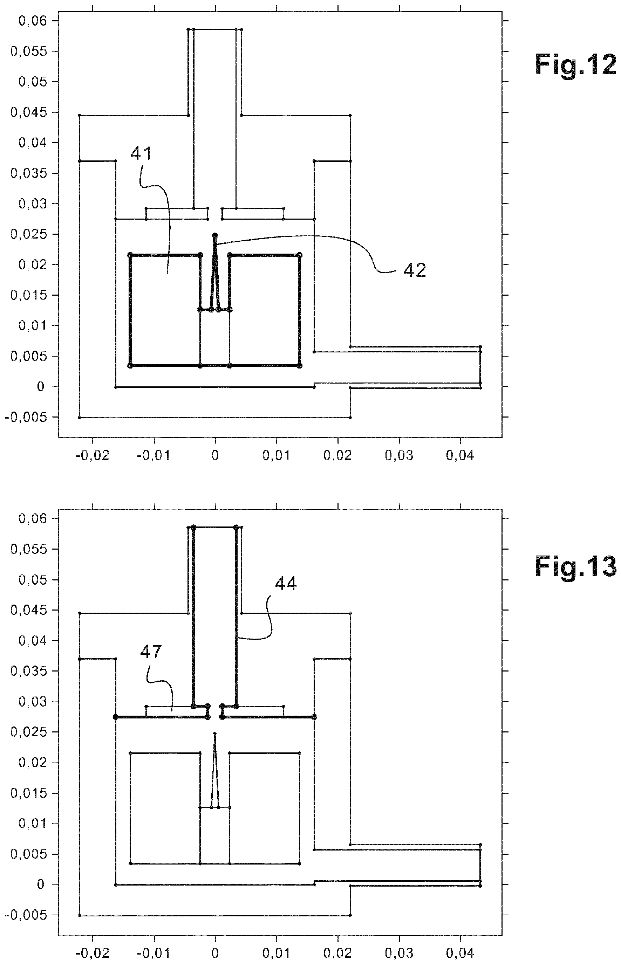

La partie inférieure du dispositif 1 représentée en figure 12 a été testée à partir des paramètres suivants dimensionnés :

- diamètre du conduit 44,
- diamètre du trou central 46,
- distance entre la pointe 42 et le disque de collection 242,
- diamètre de l'espace 45 autour de la pointe 42,
- tensions appliquées aux différentes parois du dispositif.

Les résultats et les observations d'efficacité de collecte totale issues de la simulation du dispositif 1 selon la figure 12 mais sans électrodes 19, selon différentes tailles de particules et à différents débits, sont présentés dans le tableau 1 ci-dessous.

Le tableau 2 indique quant à lui l'efficacité de collecte uniquement sur le disque de collection 241.

Le tableau 3 indique le ratio entre collecte uniquement sur le disque de collection 241 et collecte totale.

On précise ici qu'une valeur de 100 correspond à une valeur de 100%.

### TABLEAU 1

| Diamètre des particules Dp | Débit d'aspiration Q par le conduit 18 en L/min | | | |
|---|---|---|---|---|
| | 0,25 | 0,5 | 1 | 2,5 |
| 0,2 nm | 70 | 40 | 26 | 14 |
| 0,5 nm | 100 | 74 | 44 | 28 |
| 1 $\mu$m | 100 | 100 | 72 | 36 |
| 5 $\mu$m | 100 | 100 | 100 | 62 |

### TABLEAU 2

| Diamètre des particules Dp | Débit d'aspiration Q par le conduit 18 en L/min | | | |
|---|---|---|---|---|
| | 0,25 | 0,5 | 1 | 2,5 |
| 0,2 nm | 30 | 18 | 8 | 0 |
| 0,5 nm | 62 | 36 | 20 | 0 |
| 1 $\mu$m | 66 | 66 | 32 | 10 |
| 5 $\mu$m | 8 | 60 | 76 | 12 |

### TABLEAU 3

| Diamètre des particules Dp | Débit d'aspiration Q par le conduit 18 en L/min | | | |
|---|---|---|---|---|
| | 0,25 | 0,5 | 1 | 2,5 |
| 0,2 nm | 43 | 45 | 31 | 0 |
| 0,5 nm | 62 | 49 | 45 | 0 |
| 1 $\mu$m | 66 | 66 | 44 | 28 |
| 5 $\mu$m | 8 | 60 | 76 | 12 |

Du tableau 1, on peut en déduire que le sous-ensemble 10' du dispositif est plus adapté pour collecter les particules les plus grosses. De plus, on constate qu'un débit faible permet une meilleure collecte des particules, ce qui s'explique par un temps de séjour des particules au voisinage de la pointe 42 plus important dans le cas d'un débit faible.

Du tableau 2, c'est-à-dire en s'intéressant aux efficacités de collecte sur le substrat 241 et non plus à l'efficacité totale du dispositif, il ressort des efficacités de collecte moins importantes, ce qui permet de conclure que la collecte des particules ne s'effectue pas de manière exclusive sur le substrat.

Afin d'améliorer la collecte spécifique sur le substrat 241 et ainsi d'éviter des pertes de particules dans le dispositif 1, les inventeurs ont alors procédé à d'autres simulations en appliquant différents potentiels électriques appliqués à différents éléments du dispositif 1.

Dans une première configuration, comme illustré en figure 13, la pointe 42 ainsi que le support 41 sont portés à une haute tension, typiquement de l'ordre de 4000V.

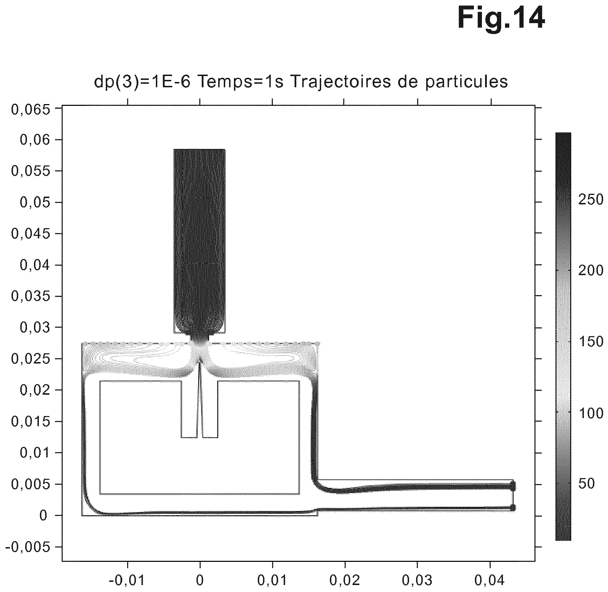

En outre, comme illustré en figure 14, l'ensemble du substrat 241, le support du substrat 241, ainsi que le conduit d'entrée 44 ont été portés au potentiel zéro.

Dans cette première configuration, aucune électrode n'est prévue à la périphérie de l'espace 43.

Un exemple de simulation de trajectoires de particules est montré en figure 15.

Sur cette figure 15, on constate que les pertes de particules dans le dispositif 1 sont pour la plupart dues à une précipitation des particules dans le trou central 46 du substrat 241, sur la face supérieure du substrat ainsi que sur le support du substrat 241.

Dans une deuxième configuration, les deux électrodes 19 sont agencées à la périphérie du conduit 11, sur la hauteur de l'espace 43.

Ces électrodes 19 permettent de favoriser la collecte des particules sur le substrat 241 et d'éviter la collecte sur son support c'est-à-dire sur les parties mécaniques qui lient le substrat 241 au conduit 11.

Ces électrodes 19 sont alimentées de la même manière que la pointe 12 et le support 43.

Les résultats et les observations d'efficacité de collecte totale issues de la simulation du dispositif 1 selon cette deuxième configuration, i.e. avec l'utilisation des électrodes 19, selon différentes tailles de particules et à différents débits, sont présentés dans le tableau 4 ci-dessous.

Le tableau 5 indique quant à lui l'efficacité de collecte uniquement sur le disque de collection 241.

Le tableau 6 indique le ratio entre collecte uniquement sur le disque de collection 241 et collecte totale.

### TABLEAU 4

| Diamètre des particules Dp | Débit d'aspiration Q par le conduit 18 en L/min | | | |
|---|---|---|---|---|
| | 0,25 | 0,5 | 1 | 2,5 |
| 0,2 nm | 62 | 32 | 22 | 12 |

(suite)

| Diamètre des particules Dp | Débit d'aspiration Q par le conduit 18 en L/min | | | |
|---|---|---|---|---|
| | 0,25 | 0,5 | 1 | 2,5 |
| 0,5 nm | 96 | 58 | 36 | 22 |
| 1 $\mu$m | 100 | 92 | 54 | 32 |
| 5 $\mu$m | 100 | 100 | 100 | 100 |

## TABLEAU 5

| Diamètre des particules Dp | Débit d'aspiration Q par le conduit 18 en L/min | | | |
|---|---|---|---|---|
| | 0,25 | 0,5 | 1 | 2,5 |
| 0,2 nm | 38 | 18 | 10 | 0 |
| 0,5 nm | 76 | 42 | 24 | 0 |
| 1 $\mu$m | 78 | 74 | 38 | 12 |
| 5 $\mu$m | 66 | 84 | 88 | 16 |

## TABLEAU 6

| Diamètre des particules Dp | Débit d'aspiration Q par le conduit 18 en L/min | | | |
|---|---|---|---|---|
| | 0,25 | 0,5 | 1 | 2,5 |
| 0,2 nm | 61 | 56 | 45 | 0 |
| 0,5 nm | 79 | 72 | 43 | 0 |
| 1 $\mu$m | 78 | 80 | 70 | 38 |
| 5 $\mu$m | 66 | 84 | 88 | 23 |

On a ensuite comparé les différents résultats et les observations d'efficacité et ratio de la simulation du dispositif 1 selon la première configuration sans électrodes comme indiqués dans les tableaux 1 à 3 avec la simulation selon la deuxième configuration, i.e. avec l'utilisation des électrodes 19, comme indiqués dans les tableaux 4 à 6.

Les différences d'efficacité totale, d'efficacité sur le substrat 24 uniquement et leur ratio, entre la deuxième configuration et la première configuration sont ainsi synthétisées respectivement aux tableaux 7 à 9.

## TABLEAU 7

| Diamètre des particules Dp | Débit d'aspiration Q par le conduit 18 en L/min | | | |
|---|---|---|---|---|
| | 0,25 | 0,5 | 1 | 2,5 |
| 0,2 nm | -8 | -8 | -4 | -2 |
| 0,5 nm | -4 | -16 | -8 | -6 |
| 1 $\mu$m | 0 | -8 | -18 | -4 |
| 5 $\mu$m | 0 | 0 | 0 | 38 |

## TABLEAU 8

| Diamètre des particules Dp | Débit d'aspiration Q par le conduit 18 en L/min | | | |
|---|---|---|---|---|
| | 0,25 | 0,5 | 1 | 2,5 |
| 0,2 nm | 8 | 0 | 2 | 0 |

(suite)

| Diamètre des particules Dp | Débit d'aspiration Q par le conduit 18 en L/min | | | |
|---|---|---|---|---|
| | 0,25 | 0,5 | 1 | 2,5 |
| 0,5 nm | 14 | 6 | 4 | 0 |
| 1 $\mu$m | 12 | 8 | 6 | 2 |
| 5 $\mu$m | 58 | 24 | 12 | 4 |

**TABLEAU 9**

| Diamètre des particules Dp | Débit d'aspiration Q par le conduit 18 en L/min | | | |
|---|---|---|---|---|
| | 0,25 | 0,5 | 1 | 2,5 |
| 0,2 nm | 18 | 11 | 15 | 0 |
| 0,5 nm | 17 | 24 | -3 | 0 |
| 1 $\mu$m | 12 | 14 | 26 | 10 |
| 5 $\mu$m | 58 | 24 | 12 | 11 |

Du tableau 7, on constate que la collecte totale est de manière générale moins efficace avec la deuxième configuration, avec une valeur extrême inférieure de -18 %. Cela peut être expliqué par le fait que dans cette deuxième configuration, les zones soumises au potentiel zéro (zones de collectes potentielles) sont plus restreintes que dans la première configuration.

Cependant, la collecte est beaucoup plus ciblée sur le substrat 241 dans la deuxième configuration, comme cela ressort des tableaux 8 et 9.

En conclusion, avec la deuxième configuration selon l'invention, on obtient, pour les particules de plus grosses tailles (1 $\mu$m, 5 $\mu$m, qui seront chargées en majorité par la partie inférieur du dispositif 1) et pour un débit faible, par exemple de 0,5 L.min$^{-1}$, une efficacité de collecte générale supérieure à 90%, avec plus de 80% des particules collectées sur le substrat 241 alors qu'elles ne sont que de 60% dans la première configuration.

Autrement dit, avec la deuxième configuration de l'invention, i.e. avec des électrodes 19 à la périphérie, on augmente la sélectivité de la collecte sur le substrat et on évite un maximum de pertes sur les parois.

Le support peut ensuite être extrait du reste du dispositif de collecte puis analysé par des techniques classiques de caractérisation physique ou physico-chimique (microscopie optique ou électronique, scanner de surface, fluorescence X, spectroscopie sur plasma induit par laser LIBS ....

Le dispositif de collecte selon l'invention est particulièrement bien adapté pour l'échantillonnage de nanoparticules dans des milieux gazeux, notamment l'air des locaux ou de l'environnement dans le but de connaître la concentration, la granulométrie, la composition chimique et/ou la morphologie des particules d'aérosol susceptibles d'être inhalées... Du fait de son faible encombrement et de sa consommation électrique réduite, ce dispositif pourrait être portatif et donc déployable à grande échelle pour un coût modéré.

D'autres variantes et améliorations peuvent être apportées sans pour autant sortir du cadre de l'invention qui est définie par les revendications ci-dessous.

L'invention n'est pas limitée aux exemples qui viennent d'être décrits; on peut notamment combiner entre elles des caractéristiques des exemples illustrés au sein de variantes non illustrées.

## Références citées

[1] : W. Hinds, « Aérosol Technology », 2nd Edition, 1999.
[2] : P. Intra et N. Tippayawong, « Aérosol an Air Quality Research », 11 : 187-209, 2011 ;
[3] : G.W. Hewitt, « The Charging of small Particles for Electrostatic Précipitation », AIEE Trans., 76 : 300-306, 1957 ;
[4] : G. Biskos, K. Reavell, N. Collings, « Electrostatic Characteriation of Corona-Wire Aerosol Chargers », J. Electrostat. 63 : 69-82, 2005;
[5] : D.Y.H. Pui, S. Fruin, P.H. McMurry, « Unipolar Diffusion Charging of Ultrafine Aérosols », Aerosol Sciences Technology 8 : 173-187, 1988 ;

**Revendications**

1. Dispositif de collecte (1) de nanoparticules susceptibles d'être présentes dans un aérosol, comprenant :

   - un conduit (11) sous la forme d'un cylindre creux de révolution autour d'un axe longitudinal (X), le conduit comprenant un orifice d'entrée (17) et un orifice de sortie (18) entre lesquels l'aérosol peut circuler ;
   - des moyens d'aspiration (18, 54) pour faire circuler l'aérosol depuis l'orifice d'entrée jusqu'à l'orifice de sortie;
   - en aval de l'orifice d'entrée, un chargeur (10) à diffusion d'ions unipolaires comprenant une électrode sous la forme d'un fil (12) qui s'étend le long de l'axe (X) et entouré par une électrode sous la forme d'une grille (14), le chargeur étant adapté pour charger les nanoparticules dans l'espace (15) séparant la grille d'une portion conductrice de paroi intérieure du conduit, par diffusion d'ions unipolaires au travers de la grille;
   - en aval du chargeur à diffusion, une électrode (22) dite électrode de champ sous la forme d'une plaque circulaire qui s'étend orthogonalement à l'axe (X), et au moins un substrat-plan de collecte (24), parallèle à l'électrode de champ, percé dans sa partie centrale d'une ouverture débouchante (240), et comprenant différents anneaux (25) concentriques autour de l'ouverture débouchante, reliés individuellement à au moins un électromètre;

   dispositif dans lequel la différence de potentiel appliquée entre l'électrode de champ et le substrat étant adaptée pour générer sans effet couronne un champ électrique dans l'espace (21) les séparant et ainsi d'une part laisser passer à travers l'ouverture débouchante les particules de dimension au-delà des nanoparticules et d'autre part collecter les nanoparticules, préalablement chargées par le chargeur à diffusion, par dépôt sur une zone de collecte du substrat-plan définie par les différents anneaux.

2. Dispositif de collecte selon la revendication 1, comprenant en outre un système (30) adapté pour permettre le chemisage du flux d'aérosol, circulant dans l'espace séparant la grille de la paroi intérieure du conduit, entre deux flux laminaires d'air filtré.

3. Dispositif de collecte selon la revendication 1 ou 2, comprenant en outre, en aval de l'ouverture débouchante (240) du substrat-plan de collecte (24), un filtre (40), de préférence sous la forme d'une membrane filtrante, adaptée pour retenir les particules ayant passé l'ouverture débouchante, le filtre (40) pouvant être relié à un électromètre.

4. Dispositif de collecte selon la revendication 1 ou 2, comprenant, en aval de l'ouverture débouchante (240) du substrat-plan de collecte (24), un élément (40') consistant en un disque (41) supportant une pointe (42) reliée à une alimentation haute tension pour créer une décharge couronne, de sorte à collecter sur la face inférieure (241) du substrat (24) les particules ayant passé l'ouverture débouchante, par l'intermédiaire d'un champ électrique de collecte imposé entre le substrat (24) et le disque (41).

5. Dispositif de collecte selon la revendication 1 ou 2, comprenant, en aval de l'ouverture débouchante (240) du substrat-plan de collecte (24), une trappe (50) sous la forme d'un disque percé d'un trou borgne (51) comprenant des lèvres et interposé en dessous de l'ouverture (240), de sorte à collecter par impaction inertielle une partie des particules, selon une gamme de dimension donnée, ayant passé l'ouverture débouchante.

6. Dispositif de collecte selon la revendication 5, les lèvres (52) du trou borgne (51) étant sous la forme d'une pointe, le disque étant relié à une alimentation haute tension pour créer une décharge couronne dans l'espace (53) entre la face inférieure (241) du substrat (24) et les lèvres (52) du trou borgne (51) de sorte à collecter, selon une gamme de dimension donnée, une partie seulement des particules, ayant passé l'ouverture débouchante, de préférence des particules de dimension comprise entre 0,1 et 4 $\mu$m.

7. Dispositif de collecte selon la revendication 5, comprenant un élément supplémentaire, tel qu'une lame ou un fil sous la forme d'une pointe, le disque étant relié à une alimentation haute tension pour créer une décharge couronne dans l'espace (53) entre la face inférieure (241) ou la face supérieure (242) du substrat (24) et l'élément supplémentaire de sorte à collecter, selon une gamme de dimension donnée, une partie seulement des particules ayant passé l'ouverture débouchante, de préférence des particules de dimension comprise entre 0,1 et 4 $\mu$m.

8. Dispositif de collecte selon l'une des revendications précédentes, les moyens d'aspiration étant constitués par une pompe ou un ventilateur.

9.  Dispositif de collecte selon l'une des revendications 1 à 7, les moyens d'aspiration étant constitués au moins en partie par des actionneurs-plasma (54).

10. Dispositif de collecte selon l'une des revendications précédentes, l'électrode de champ (21) étant reliée à une alimentation haute tension, de préférence comprise entre 2 et 6kV.

11. Dispositif de collecte selon l'une des revendications précédentes, la grille (14) étant reliée à une alimentation basse tension, de préférence de l'ordre de 100V.

12. Dispositif de collecte selon l'une des revendications précédentes, le substrat-plan de collecte (24) étant relié au potentiel zéro.

13. Procédé de fonctionnement d'un dispositif de collecte selon l'une des revendications précédentes, comprenant une étape d'émission d'une alarme en cas de dépassement d'une valeur seuil prédéterminée mesurée à l'aide du ou des électromètres reliés aux anneaux concentriques (25) intégrés au substrat-plan de collecte (24).

14. Utilisation d'un dispositif selon l'une des revendications 1 à 13 pour collecter tout en les classant des nanoparticules de dimensions différentes ou pour évaluer l'exposition individuelle des travailleurs ou des consommateurs aux nanoparticules.

15. Utilisation d'un dispositif selon l'une des revendications 1 à 13 pour déterminer une distribution granulométrique d'un aérosol contenant une fraction nanoparticulaire.

**Patentansprüche**

1.  Vorrichtung zum Sammeln (1) von Nanopartikeln, die in einem Aerosol anwesend sein können, die Folgendes umfasst:

    - eine Leitung (11) in der Form eines Rotationshohlzylinders um eine Längsachse (X), wobei die Leitung eine Eingangsöffnung (17) und eine Ausgangsöffnung (18) umfasst, zwischen welchen das Aerosol zirkulieren kann;
    - Ansaugmittel (18, 54), um das Aerosol von der Eingangsöffnung bis zu der Ausgangsöffnung zirkulieren zu lassen;
    - stromabwärts der Eingangsöffnung einen Lader (10) mit Diffusion einpoliger Ionen, der eine Elektrode in der Form eines Drahts (12) umfasst, die sich entlang der Achse (X) erstreckt und von einer Elektrode in Form eines Gitters (14) umgeben ist, wobei der Lader angepasst ist, um die Nanopartikel in dem Raum (15), der das Gitter von einem leitenden Abschnitt der Innenwand der Leitung trennt, durch Diffusion einpoliger Ionen durch das Gitter zu laden;
    - stromabwärts des Laders mit Diffusion eine Elektrode (22), Feldelektrode genannt, in der Form einer kreisförmigen Platte, die sich orthogonal zu der Achse (X) erstreckt, und mindestens eine Substrat-Sammelebene (24) parallel zu der Feldelektrode, die in ihrem zentralen Teil mit einer durchgehenden Öffnung (240) durchbohrt ist, und unterschiedliche konzentrische Ringe (25) um die durchgehende Öffnung, die individuell mit mindestens einem Elektrometer verbunden sind, umfasst;

    Vorrichtung, bei der der Potenzialunterschied, der zwischen der Feldelektrode und dem Substrat angelegt wird, angepasst ist, um ohne Koronaeffekt ein elektrisches Feld in dem Raum (21), der sie trennt, zu erzeugen, und daher einerseits durch die durchgehende Öffnung die Partikel mit Maßen, die über Nanopartikel hinausgehen, durchzulassen, und andererseits die Nanopartikel, die zuvor von dem Lader mit Diffusion geladen wurden, durch Ablagerung auf einer Sammelzone der Substratebene, die von den unterschiedlichen Ringen definiert wird, zu sammeln.

2.  Sammelvorrichtung nach Anspruch 1, die außerdem ein System (30) umfasst, das angepasst ist, um das Auskleiden des Aerosolflusses, der in dem Raum, der das Gitter und die Innenwand der Leitung trennt, zirkuliert, zwischen zwei laminaren Flüssen gefilterter Luft zu erlauben.

3.  Sammelvorrichtung nach Anspruch 1 oder 2, die außerdem stromabwärts der durchgehenden Öffnung (240) der Substrat-Sammelebene (24) ein Filter (40) bevorzugt in der Form einer Filtermembran umfasst, die angepasst ist, um die Partikel, die durch die durchgehende Öffnung durchgegangen sind, zurückzuhalten, wobei das Filter (40) mit einem Elektrometer verbunden sein kann.

4. Sammelvorrichtung nach Anspruch 1 oder 2, die stromabwärts der durchgehenden Öffnung (240) der Substrat-Sammelebene (24) ein Element (40') umfasst, das aus einer Scheibe (41) besteht, die eine Spitze (42) trägt, die mit einer Hochspannungsversorgung verbunden ist, um eine Koronaentladung zu schaffen, so dass auf der unteren Fläche (241) des Substrats (24) die Partikel, die durch die durchgehende Öffnung durchgegangen sind, über ein elektrisches Sammelfeld, das zwischen dem Substrat (24) und der Scheibe (41) auferlegt wird, gesammelt werden.

5. Sammelvorrichtung nach Anspruch 1 oder 2, die stromabwärts der durchgehenden Öffnung (240) der Substrat-Sammelebene (24) eine Klappe (50) in der Form einer Scheibe umfasst, die mit einem Sackloch (51) durchbohrt ist, das Lippen umfasst und unterhalb der Öffnung (240) derart eingefügt ist, dass durch Trägheitsaufprall ein Teil der Partikel gemäß einer gegebenen Reihe von Maßen, die durch die durchgehende Öffnung durchgegangen sind, gesammelt wird.

6. Sammelvorrichtung nach Anspruch 5, wobei die Lippen (52) des Sacklochs (51) die Form einer Spitze aufweisen, wobei die Scheibe mit einer Hochspannungsversorgung verbunden ist, um eine Koronaentladung in dem Raum (53) zwischen der unteren Fläche (241) des Substrats (24) und den Lippen (52) des Sacklochs (51) derart zu schaffen, dass gemäß einer gegebenen Reihe von Maßen nur ein Teil der Partikel, die durch die durchgehende Öffnung durchgegangen sind, gesammelt wird, bevorzugt Partikel mit Maßen zwischen 0,1 und 4 $\mu$m.

7. Sammelvorrichtung nach Anspruch 5, die ein zusätzliches Element, wie eine Klinge oder einen Draht in der Form einer Spitze umfasst, wobei die Scheibe mit einer Hochspannungsversorgung verbunden ist, um eine Koronaentladung in dem Raum (53) zwischen der unteren Fläche (241) oder der oberen Fläche (242) des Substrats (24) und dem zusätzlichen Element derart zu schaffen, dass gemäß einer gegebenen Reihe von Maßen nur ein Teil der Partikel, die durch die durchgehende Öffnung durchgegangen sind, gesammelt wird, bevorzugt Partikel mit Maßen zwischen 0,1 und 4 $\mu$m.

8. Sammelvorrichtung nach einem der vorstehenden Ansprüche, wobei die Ansaugmittel aus einer Pumpe oder einem Gebläse bestehen.

9. Sammelvorrichtung nach einem der Ansprüche 1 bis 7, wobei die Ansaugmittel mindestens zum Teil aus Aktuatoren-Plasma (54) bestehen.

10. Sammelvorrichtung nach einem der vorstehenden Ansprüche, wobei die Feldelektrode (21) mit einer Hochspannungssversorgung verbunden ist, die bevorzugt zwischen 2 und 6 kV liegt.

11. Sammelvorrichtung nach einem der vorstehenden Ansprüche, wobei das Gitter (14) mit einer Niederspannungsversorgung bevorzugt in der Größenordnung von 100 V verbunden ist.

12. Sammelvorrichtung nach einem der vorstehenden Ansprüche, wobei die Substrat-Sammeleebene (24) mit dem Nullpotenzial verbunden ist.

13. Betriebsverfahren einer Sammelvorrichtung nach einem der vorstehenden Ansprüche, das einen Schritt des Ausgebens eines Alarms im Fall eines Überschreitens eines vorbestimmten Schwellenwerts umfasst, der mit Hilfe des oder der Elektrometer(s), das/die mit den konzentrischen Ringen (25), die in das ebene Sammelsubstrat (24) integriert sind, verbunden ist/sind, gemessen wird.

14. Verwendung einer Vorrichtung nach einem der Ansprüche 1 bis 12 zum Sammeln und gleichzeitigen Klassieren der Nanopartikel unterschiedlicher Maße oder zum Bewerten der individuellen Exposition der Arbeiter oder Verbraucher mit den Nanopartikeln.

15. Verwendung einer Vorrichtung nach einem der Ansprüche 1 bis 12 zum Bestimmen einer Granulometrieverteilung eines Aerosols, das einen Nanopartikelanteil enthält.

**Claims**

1. A device (1) for collecting nanoparticles likely to be present in an aerosol, comprising:

- a conduit (11) in the form of a hollow cylinder for rotating about a longitudinal axis (X), the conduit comprising an inlet orifice (17) and an outlet orifice (18), between which the aerosol may circulate;
- suction means (18, 54) for circulating the aerosol from the inlet orifice to the outlet orifice;
- a unipolar ion diffusion charger (10), downstream of the inlet orifice, comprising an electrode in the form of a wire (12) that extends along the axis (X) and is surrounded by an electrode in the form of a gate (14), the charger being adapted to charge the nanoparticles in the space (15) separating the gate from a conducting portion of the internal wall of the conduit by diffusing unipolar ion through the gate;
- an electrode (22), called field electrode, downstream of the diffusion charger, which electrode is in the form of a circular plate that extends orthogonal to the axis (X), and at least one flat substrate (24), parallel to the field electrode, perforated in its central part with a through opening (240), and comprising various concentric rings (25) around the through opening individually connected to at least one electrometer;

device in which the potential difference applied between the field electrode and the substrate being adapted to generate an electric field without a corona effect in the space (21) that separates them and thus, on the one hand, to allow particles bigger than nanoparticles to pass through the through opening and, on the other hand, to collect the nanoparticles previously charged by the diffusion charger by deposition onto a collection zone of the flat substrate defined by the various rings.

2. The collection device as claimed in claim 1, further comprising a system (30) adapted to allow the aerosol flow circulating in the space separating the gate from the internal wall of the conduit to be enveloped between two laminar flows of filtered air.

3. The collection device as claimed in claim 1 or claim 2, further comprising, downstream of the through opening (240) of the flat collection substrate (24), a filter (40), preferably in the form of a filtering membrane, adapted to retain the particles having passed through the through opening, the filter (40) being able to be connected to an electrometer.

4. The collection device as claimed in claim 1 or claim 2, comprising, downstream of the through opening (240) of the collection substrate (24), an element (40') consisting in a disk (41) supporting a tip (42) connected to a high-voltage power supply for creating a corona discharge, so as to collect, on the lower face (241) of the substrate (24), the particles having passed through the through opening, by means of an electric collection field imposed between the substrate (24) and the disk (41).

5. The collection device as claimed in claim 1 or claim 2, comprising, downstream of the through opening (240) of the flat collection substrate (24), a trap (50) in the form of a disk perforated with a blind hole (51) interposed below the opening (240), so as to collect by inertial impaction, according to a given size range, part of the particles having passed through the through opening.

6. The collection device as claimed in claim 5, the lips (52) of the blind hole (51) being in the form of a tip, the disk being connected to a high-voltage power supply to create a corona discharge in the space (53) between the lower face (241) of the substrate (24) and the lips (52) of the blind hole (51) so as to collect, according to a given size range, only part of the particles having passed through the through opening, preferably particles with dimensions between 0.1 and 4 $\mu$m.

7. The collection device as claimed in claim 5, comprising an additional element, such as a blade or a wire in the form of a tip, the disk being connected to a high-voltage power supply for creating a corona discharge in the space (53) between the lower face (241) or the upper face (242) of the substrate (24) and the additional element, so as to collect, according to a given size range, only part of the particles having passed through the through opening, preferably particles with dimensions between 0.1 and 4 $\mu$m.

8. The collection device as claimed in any of the preceding claims, the suction means being formed by a pump or a fan.

9. The collection device as claimed in any of claims 1 to 7, the suction means being at least partly formed by plasma actuators (54).

**10.** The collection device as claimed in any of the preceding claims, the field electrode (21) being connected to a high-voltage power supply, preferably between 2 and 6 kV.

**11.** The collection device as claimed in any of the preceding claims, the gate (14) being connected to a low-voltage power supply, preferably of approximately 100 V.

**12.** The collection device as claimed in any of the preceding claims, the flat collection substrate (24) being connected to zero potential.

**13.** A method for operating a collection device as claimed in any of the preceding claims, comprising a step of emitting an alarm in the event that a predetermined threshold value is exceeded that is measured using the one or more electrometer(s) connected to the concentric rings (25) integrated in the flat collection substrate (24).

**14.** The use of a device as claimed in any of claims 1 to 12 for collecting and at the same time classifying nanoparticles with different dimensions or for evaluating the individual exposure of workers or of consumers to the nanoparticles.

**15.** The use of a device as claimed in any of claims 1 to 12 for determining a particle size distribution of an aerosol containing a nanoparticulate fraction.

# Fig.1

Entrée Aérosol
17
15
12
11 14
1
1
18 Sortie Aérosol
10

# Fig.2

X
17
1
12
20
21
25 240 18
11
14
15
22
24
10

**Fig.3**

**Fig.4**

## Fig.5

## Fig.6

# Fig.7

TEMPS=5sTRAJECTOIRES DE PARTICULES

# Fig.8

TEMPS=5sTRAJECTOIRES DE PARTICULES

# Fig.9

TEMPS=5sTRAJECTOIRES DE PARTICULES

Fig.10

Fig.11

Fig.12

Fig.13

# Fig.14

dp(3)=1E-6 Temps=1s Trajectoires de particules

Fig.15

Fig.16

## RÉFÉRENCES CITÉES DANS LA DESCRIPTION

**Documents brevets cités dans la description**

- US 5098657 A
- US 7549318 B2
- US 8044350 B2
- US 6200539 B1
- US 8348626 B2

**Littérature non-brevet citée dans la description**

- **W. HINDS.** Aérosol Technology. 1999
- **P. INTRA ; N. TIPPAYAWONG.** *Aérosol an Air Quality Research,* 2011, vol. 11, 187-209
- **G.W. HEWITT.** The Charging of small Particles for Electrostatic Précipitation. *AIEE Trans.,* 1957, vol. 76, 300-306
- **G. BISKOS ; K. REAVELL ; N. COLLINGS.** Electrostatic Characteriation of Corona-Wire Aerosol Chargers. *J. Electrostat.,* 2005, vol. 63, 69-82
- **D.Y.H. PUI ; S. FRUIN ; P.H. MCMURRY.** Unipolar Diffusion Charging of Ultrafine Aérosols. *Aerosol Sciences Technology,* 1988, vol. 8, 173-187